# EUROPÄISCHE PATENTSCHRIFT

(11) **EP 0 947 237 B1**
(45) Veröffentlichungstag und Bekanntmachung des Hinweises auf die Patenterteilung: **26.05.2004**
(21) Anmeldenummer: 98104588.3
(22) Anmeldetag: 13.03.1998
(51) Int. Cl.: B01D 63/04, B01D 63/06, B01D 65/08

(54) **Vorrichtung zur Trennung von mit Fremdstoffen belasteten flüssigen Medien**
Apparatus for separating liquid media containing impurities
Dispositif de séparation de milieux liquides chargés d'impuretés

(43) Veröffentlichungstag der Anmeldung: 06.10.1999
(73) Patentinhaber: Rochem Ultrafiltrations Systeme Gesellschaft für Abwasserreinigung mbH, 20355 Hamburg (DE)
(72) Erfinder: Heine, Wilhelm, 21077 Hamburg (DE); Rautenbach, Robert, Prof. Dr., 6291 N Vaals (NL); Vossenkaul, Klaus, 52159 Roetgen (DE)
(74) Vertreter: Niedmers, Ole, Dipl.-Phys.

(56) Entgegenhaltungen:
- EP-A- 0 207 379
- EP-A- 0 707 884
- WO-A-96/07471
- FR-A- 2 234 912
- FR-A- 2 265 437
- GB-A- 2 011 796
- PATENT ABSTRACTS OF JAPAN vol. 095, no. 003, 28. April 1995 -& JP 06 343836 A (UBE IND LTD;OTHERS: 01), 20. Dezember 1994 -& DATABASE WPI Section Ch, Week 9510 Derwent Publications Ltd., London, GB; Class J01, AN 95-069411 XP002074972
- PATENT ABSTRACTS OF JAPAN vol. 017, no. 561 (C-1119), 8. Oktober 1993 -& JP 05 161832 A (MITSUBISHI KASEI CORP), 29. Juni 1993 -& DATABASE WPI Section Ch, Week 9330 Derwent Publications Ltd., London, GB; Class J01, AN 93-239368 XP002080970 A
- PATENT ABSTRACTS OF JAPAN vol. 017, no. 042 (C-1020), 26. Januar 1993 -& JP 04 256424 A (NITTO DENKO CORP), 11. September 1992 -& DATABASE WPI Section Ch, Week 9243 Derwent Publications Ltd., London, GB; Class J01, AN 92-353902 XP002074973
- PATENT ABSTRACTS OF JAPAN vol. 010, no. 355 (C-388), 29. November 1986 -& JP 61 153104 A (JAPAN ORGANO CO LTD), 11. Juli 1986 -& DATABASE WPI Section Ch, Week 8634 Derwent Publications Ltd., London, GB; Class J01, AN 86-222155 XP002074974 -& CHEMICAL ABSTRACTS, vol. 105, no. 20, 17. November 1986 Columbus, Ohio, US; abstract no. 174908, XP002074970
- PATENT ABSTRACTS OF JAPAN vol. 018, no. 043 (C-1156), 24. Januar 1994 -& JP 05 269354 A (NITTO DENKO CORP), 19. Oktober 1993 -& DATABASE WPI Section Ch, Week 9346 Derwent Publications Ltd., London, GB; Class A88, AN 93-364428 XP002074975 -& CHEMICAL ABSTRACTS, vol. 120, no. 6, 7. Februar 1994 Columbus, Ohio, US; abstract no. 57336, XP002074971

## Beschreibung

Die Erfindung betrifft eine Vorrichtung zur Trennung von mit Fremdstoffen belasteten flüssigen Medien, insbesondere kommunalen und gewerblichen Abwässern, umfassend eine Membranelemente aufweisenden Membrantrenneinrichtung, wobei das zu trennende Medium über einen Einlaß der Vorrichtung auf die Zufuhrseite der Membrantrenneinrichtung gegeben wird und das mit Fremdstoffen aufkonzentrierte Retentat und das von Fremdstoffen befreite Permeat über jeweilige Auslässe abgeführt werden, wobei eine Merhzahl von Membranelementen jeweils im wesentlichen in Strömungsrichtung des Mediums durch die Vorrichtung sich wenigstens teilweise ausbildende, vom Einlaß zum Auslaß lineare Strömungskanäle für das mit Fremdstoffen belastete Medium im wesentlichen einschließen.

Aus der JP-A- 06 34 3836 ist eine Vorrichtung der eingangs genannten Art bekannt, bei der ein Bündel von Hohlfadenmembranen jeweils um einen Kreisförmigen Strömungskanal herum angeordnet ist. Mehrere derartige Strömungskanäle sind in einem Gehäuse angeordnet. Lediglich die zu den Innenseiten der Strömungskanäle gerichteten Teile der Hohlfadenmembranen können gezeilt mit dem zu trennenden Medium beaufschlagt werden.

Vorrichtungen dieser Art sind seit geraumer Zeit bekannt und werden für die vielfältigsten Trennvorgänge bei flüssigen, aus mehreren Komponenten zusammengesetzten Medien, aber auch bei gasförmigen Medien eingesetzt. Ein wesentlicher Aspekt der Trennung von kommunalen aber auch gewerblichen Abwässern mittels der vorbeschriebenen gattungsmäßigen Vorrichtungen ist der, daß man das die Vorrichtung verlassende Retentat soweit mit den abzutrennenden Stoffen aufkonzentriert zur Verfügung haben möchte, daß dieses für den nachfolgenden biologischen Abbauprozeß in optimaler Konzentration zur Verfügung steht. Dazu ist es erforderlich, den flüssigen Anteil, d.h. das Wasser, aus dem zu trennenden Medium möglichst derart rein in einem Behandlungsschritt zu gewinnen, daß dieses ohne weitere Nachbehandlung in die Umgebung als Brauch- oder Reinwasser abgegeben werden kann. Eine weitere Forderung an den Betrieb der gattungsgemäßen Vorrichtungen ist die, daß der Energieaufwand zum Betrieb derartiger Vorrichtungen möglichst gering gehalten werden soll, um das Kosten-Nutzen-Verhältnis positiv zu beeinflussen.

Die bisher im Stand der Technik verwendeten Vorrichtungen liefern, soweit man jüngste Entwicklungen auf diesem Gebiete betrachtet, zufriedenstellende Ergebnisse in bezug auf die vorangeführten Parameter. Ein Problem aber ist das Verhalten gegenüber Verschmutzungen/Verblockungen im Dauerbetrieb. Hier zeigen zwar die mit hohem spezifischen Energieverbrauch betriebenen sogenannten Cross-Flow-Rohrsysteme, daß auch bei hohem Feststoffanteil im Rohwasser ein störungsfreier Betrieb bei hoher Leistung möglich ist, bei Systemen mit geringem spezifischen Energiebedarf ist aber nur bei sehr geringen Leistungen ein Betrieb bei hohen Feststoffgehalten möglich. Insbesondere die Systeme mit hoher Membranpackungsdichte zeigen aber schon bei mäßiger Feststoffbelastung im Rohwasser einen Leistungsabfall, der bis zum völligen Versagen führen kann und dies trotz periodischer Spülungen der Membranelemente. Die Folge ist, daß die Vorrichtungen demontiert, mühsam gereinigt, wieder zusammenmontiert und neu in das installierte Reinigungssystem eingebaut werden mußten. Die Zeitintervalle, in denen derartige Reinigungsvorgänge durchgeführt werden mußten, sind je nach Belastungsgrad der zu trennenden Medien mit Fremdstoffen und der Art der Fremdstoffe zwar unterschiedlich lang, sie sind aber dennoch insgesamt, d.h. unter Zugrundelegung einer Gesamtbetrachtung, viel zu kurz als das ein wirklich effektiver Reinigungsbetrieb von kommunalen und gewerblichen Abwässern mittels der Vorrichtungen der bisher bekannten gattungsgemäßen Art durchgeführt werden kann.

Dieses hat seinen Grund auch zusätzlich noch darin, daß nicht nur die Membranelemente eines der wesentlichen neuralgischen Punkte derartiger Vorrichtungen sind, sondern auch die Art der Beströmung bzw. Überströmung des zu trennenden Mediums über die Membranelemente bzw. an den Membranelementen längs. Man hat für derartige Trennaufgaben im Stand der Technik bekannte Vorrichtungen verwendet, bei denen die Membranelemente in einem druckdichten Gehäuse in Form von flächen- bzw. scheibenförmigen Elementen angeordnet sind, wobei das zu trennende Medium in dem Gehäuse der Vorrichtung die Membranelemente von einem Einlaß zu einem Retentatauslaß mäanderförmig durchläuft oder alle Membranelemente parallel mittels des Mediums angeströmt werden. Dabei verläßt auch das mit Fremdstoffen aufkonzentrierte Retentat das Gehäuse der Vorrichtung an einem über einen Auslaß, wobei das Permeat, beispielsweise Reinwasser, zentral abgeleitet und über einen Auslaß ebenfalls das Gehäuse der Vorrichtung verläßt. Auch sind im Stand der Technik Mischformen der vorbeschriebenen Art von Vorrichtungen bekannt, beispielsweise solche, bei denen ein Teil der Membranelemente parallel mit dem zu trennenden Medium angeströmt wird und Blöcke aus parallel angeströmten Membranelementen wiederum reihenschaltungsmäßig hintereinander geschaltet sind.

Allen diesen Vorrichtungen haftet an, daß sie aufgrund der Umlenkung des zu trennenden Mediums und des damit verbundenen hydrodynamischen Widerstandes mit verhältnismäßig hohem Druck des zugeführten Mediums arbeiten müssen, um alle Membranelemente auch überstreichen zu können, wobei auch aufgrund der damit verbundenen Beeinträchtigung der Strömungsgeschwindigkeit des zu trennenden Mediums einer Verblockung der Membranelemente mit Fremdstoffen im Medium Tor und Tür geöffnet ist.

Es ist Aufgabe der vorliegenden Erfindung eine Vorrichtung der eingangs genannten Art zu schaffen, die eine gegenüber den bisher im Stand der Technik bekannten Vorrichtungen sicherere und störungsfreiere Arbeitsweise zeigt, bei der Verstopfungen, Verblockungen oder sonstige den Betrieb der Vorrichtung behindernde, einschränkende oder sogar unmöglich machende Behinderungen vermieden werden, daß eine Demontage der Vorrichtung dennoch auf einfache Weise möglich ist und die Vorrichtung einfach im Aufbau ist und kostengünstig bereitstellbar und für den bestimmungsgemäßen Betrieb kostengünstig betreibbar ist.

Gelöst wird die Aufgabe gemaß der Erfindung dadurch, daß die Strömungskanäle derart ausgebildet sind, daß alle Membranelemente gleichzeitig von allen Seiten vom zu trennenden Medium ausgeströmt werden, wobei die Strömungskanale vieleckig sind.

Der Vorteil der erfindungsgemäßen Lösung besteht im wesentlichen darin, daß diese, anders als bei den im Stand der Technik bekannten Vorrichtungen, einen im wesentlichen die gesamte Vorrichtung vom Einlaß zum Auslaß für das zu trennende Medium im wesentlichen linear durchgehenden Strömungskanal aufweist und dabei die Membranelemente, die in der Vorrichtung angeordnet sind, allesamt gleichzeitig mit dem zu trennenden flüssigen Medium angeströmt werden. Die Membranelemente werden von außen vom zu filternden bzw. zu trennenden Medium umströmt und weisen stets einen Strömungskanal im inneren des jeweiligen Membranelementes auf, in dem das gereinigte Filtrat bzw. das Permeat abgeführt wird. Die lösungsgemäße Ausgestaltung der Vorrichtung ermöglicht es tatsächlich, daß alle bestimmungsgemäß in der Vorrichtung angeordneten Membranelemente gleichzeitig von allen Seiten, die eine Permeation des flüssigen Anteils des Mediums auch nur ermöglichen, angeströmt werden. Da es bei der erfindungsgemäßen Membrananordnung und der erfindungsgemäßen Ausbildung der Strömungskanäle keine Umlenkungen des strömenden, zu trennenden Mediums gibt, kann auch erfindungsgemäß keine Verblockung oder sonstige Zusetzung der Membranelemente mit Feststoffen vonstatten gehen. Ein weiterer wesentlicher Vorteil der erfindungsgemäßen Lösung besteht, wie angestrebt, darin, daß die Vorrichtung aufgrund der im wesentlichen linear ausgebildeten Strömungskanäle auch keine Abstandselemente, Führungselemente oder sonstige Elemente benötigt, die die Strömungsrichtung des zu trennenden Mediums innerhalb der Vorrichtung in irgendeiner Weise beeinflussen. Aus diesem Grunde ist die Vorrichtung einfach und somit sehr kostengünstig herstellbar.

Die zum Betrieb der Vorrichtung erforderliche Druckdifferenz zwischen der Rohmediumseite, d.h. der Seite, auf der das zu trennende Medium geführt wird, und der Filtrat- bzw. Permeatseite kann entweder über einen permeatseitigen Underdruck oder über einen rohmediumseitigen Überdruck oder auch über eine Kombination von beiden realisiert werden. Aufgrund der im wesentlichen linear ausgebildeten Strömungskanäle sowie der umlenkungsfreien Gestaltung ist der hydraulische Widerstand beim Durchströmen der Vorrichtung gering. Aus diesem Grunde ist der für die Durchströmung der Vorrichtung erforderliche rohmediumseitige Überdruck und daher auch der Energiebedarf gering. Das Rohmedium ist das erfindungsgemäß zu trennende Medium.

Schließlich ist es bei der erfindungsgemäßen Lösung von Vorteil, daß aufgrund des einfach möglichen Aufbaus auch eine schnelle Demontage, Reinigung und Wiedermontage möglich ist, was sogar aufgrund des einfachen Aufbaus der Vorrichtung ohne geschultes Personal durchführbar ist.

Besonders vorteilhaft ist es aber, die jeweiligen Strömungskanäle im Querschnitt sechseckig auszubilden, so daß über eine zur Verfügung stehende Fläche, auf der die Membranelemente auf geeignete Weise fixiert werden können, eine optimale Flächennutzung möglich ist.

Um im Sinne der obigen erfindungsgemäßen Lösung um die jeweiligen Strömungskanäle herum die Membranelemente anzuordnen, braucht es prinzipiell keiner besonderen Ausgestaltung der Membranelemente. Es können deshalb prinzipiell beliebige geeignete Membranelemente verwendet werden, beispielsweise vorteilhafterweise Membranelemente, die in Form von Kissenmembranen ausgebildet sind. Diese Kissenmembranen, deren Aufbau die Fachwelt an sich kennt, werden in der Fachwelt bisweilen auch Membrankissen oder Membrantaschen genannt. Alle drei verwendeten Begriffe sind für diesen Membrantyp synonyme Begriffe. Membrankissen hätten beispielsweise den Vorteil, daß sie zur Ausbildung des erfindungsgemäßen Strömungskanals, wenn dieser beispielsweise einen sechseckförmigen Querschnitt aufweist, diesen sechseckförmig begrenzt, d.h. der eigentliche Strömungskanal zwischen den Membranelementen wäre dann auch sechseckförmig. Es würden keine weiteren Membranelemente benötigt werden, wobei bei insgesamt verwendeten sechseckförmigen Querschnitten der Strömungskanäle in der Vorrichtung insgesamt die Rückseite des jeweiligen Membranelementes eines Strömungskanals vom benachbarten Strömungskanal beaufschlagt werden würde, d.h. mit der Rückseite einen Teil des benachbarten Strömungskanals bilden würde. Somit wäre auf einfache Weise eine optimale Anordnung von Membranelementen dieser Art für die gesamten Strömungskanäle einer Vorrichtung möglich.

Sehr vorteilhaft ist es, die Membranelemente in Form sogenannter Hohlfadenmembranen auszubilden, die an sich im Stand der Technik ebenfalls bekannt sind. Diese Hohlfadenmembranen, die es mit den verschiedensten Außen- und Innendurchmessern gibt bzw. deren Realisierung in bezug auf ihren Aufbau auf unterschiedliche Weise möglich ist, haben den Vorteil einer einfachen Möglichkeit der Anordnung in der Vorrichtung in Längsrichtung. Diese Hohlfadenmembranen können ebenfalls auf beliebige Weise den Strömungskanal bilden, d.h. eine beliebige Menge von Hohlfadenmembranen, die nebeneinander und gegebenenfalls auch zusätzlich aneinander positioniert werden können, können ebenfalls wiederum auf beliebige geeignete Weise mit beliebigen geeigneten Querschnitten ausgebildete Strömungskanäle bilden. Bei den Hohlfadenmembranen bilden hier die Innenräume der Hohlfäden den Raum, in dem das Permeat durch die Wandung der Hohlfadenmembran hindurch permeiert, wobei zu einer Seite hin dann das Permeat auf einfache Weise abführbar ist, während das andere Ende verschlossen ist.

Die einzelnen Membranelemente sind außer der Fixierung im gemeinsamen Anschlußelement nicht miteinander verbunden, so daß der vorzugsweise linear ausgebildete Strömungskanal keine starre Berandung aufweist und dementsprechend flexibel ist. Dieses reduziert entscheidend die Gefahr einer Verblockung der Vorrichtung. An den frei beweglichen, nicht befestigten oder verschlossenen Enden der Membranelemente am Konzentratausgang der Vorrichtung können insbesondere auch keine fadenförmigen oder faserigen Verunreinigungen zu Verblockungen führen, da diese mit der Strömung des zu trennenden Mediums vom Membranelement in Strömungsrichtung abgestreift werden können.

Obwohl es prinzipiell möglich ist, die Vorrichtung auf an sich beliebige geeignete Weise in eine Strömungsbahn des zu trennenden Mediums einzusetzen, ist es für bestimmte Anwendungszwecke, wenn beispielsweise die Vorrichtung gesondert zu einem Behälter oder einer Anlage, in der das zu trennende Medium enthalten ist, angeordnet werden soll, vorteilhaft ein Gehäuse vorzusehen, in der die Mehrzahl der Membranelemente angeordnet ist. Da die Vorrichtung bestimmungsgemäß mit geringem Oberdruck auf der Zufuhrseite des flüssigen Mediums und/oder mit einem geringen Unterdruck auf der Permeatseite arbeitet, d.h. mit einer geringen Druckdifferenz, braucht das Gehäuse nicht großen Drücken standhalten zu können, so daß es aus geeigneten, preiswerten Werkstoffen, die in Form von Rohrhalbzeugen bereitbestehen, hergestellt werden kann. Es eignen sich zur Ausbildung des Gehäuses insbesondere Kunststoffe, gegebenenfalls aber auch metallische Werkstoffe, die lediglich in bezug auf ihre Verträglichkeit mit dem zu trennenden Medium ausgesucht zu werden brauchen.

Bei einer weiteren vorteilhaften Ausgestaltung der Vorrichtung münden die Membranelemente mit ihren Permeatabflußöffnungen in einem ggf. druckdicht im Gehäuse lösbar anbringbaren Abschlußelement, d.h. das Abschlußelement als solches bildet ein einseitiges Aufnahmeelement für alle Membranelemente, die bestimmungsgemäß in einer Vorrichtung untergebracht sind bzw. dort Verwendung finden. Mittels des Abschlußelementes können somit alle Membranelemente bei einer Demontage bzw. Montage mittels eines Vorganges aus der Vorrichtung bzw. einem Gehäuse entfernt und in die Vorrichtung bzw. das Gehäuse hineinverbracht werden. In dem Anschlußelement sind die Membranelemente derart fixiert, daß das Permeat in absolut ungemischter bzw. unbeeinträchtigter Form aus den Membranelementen abgeführt werden kann.

Bei einer noch anderen vorteilhaften Ausgestaltung der Vorrichtung weist das Abschlußelement einen Permeatabflußkanal auf, in den das aus den Membranelementen aus ihren Permeatabflußöffnugen austretende Permeat eintritt, wobei das die Vorrichtung verlassende Permeat über den mit dem Permeatabflußkanal verbundenen Permeatauslaß abführbar ist.

Bei dieser Ausgestaltung dient das Abschlußelement somit nicht nur lediglich der ordentlichen Fixierung der Membranelemente, sondern auch als Einrichtung, mit der das aus den Permeataustrittsöffnungen der Membranelemente austretende Permeat gesammelt und über einen oder mehrere Permeatauslässe, die auch auf dem Abschlußelement angeordnet sein können, abführbar ist.

Um zu gewährleisten, daß die von den Membranelementen lösungsgemäß umgebenen Strömungskanäle beim Vorsehen des Abschlußelementes ungestört von zu trennendem, flüssigem Medium angeströmt werden können, ist es vorteilhaft, daß das Abschlußelement eine Mehrzahl von Durchgängen bzw. Durchgangsöffnungen für das flüssige Medium entsprechend der Mehrzahl von Strömungskanälen aufweist, wobei die Durchgänge das Abschlußelement von der Außenseite zum Vorrichtungsinnenraum hin durchqueren. Diese Durchgangsöffnungen bzw. Durchgänge bilden faktisch die Verlängerung der Strömungskanäle der Vorrichtung.

Vorzugsweise können die Durchgänge an ihrem zur Außenseite gerichteten Ende im Querschnitt vieleckig oder sechseckig oder kreisförmig ausgebildet sein und an ihrem zum Vorrichtungsinnenraum gerichteten Ende im Querschnitt sechseckig, je nach dem, welche Querschnittsfläche für die Strömungskanäle zwischen den Membranelementen in der Vorrichtung gebildet wird. Es kann aber auch vorteilhaft sein, beispielsweise beim im Abschlußelement gebildetem Strömungskanal in der Vorrichtung durch entsprechende Anordnung der Membranelemente den Querschnitt der Durchgänge im Anschlußelement an ihrem zur Außenseite gerichteten Ende beispielsweise sechseckförmig auszubilden, wobei es immer das Ziel ist, einen möglichst geringen hydrodynamischen Widerstand auf das zu trennende Medium durch bauliche Maßnahmen innerhalb der Vorrichtung anzustreben.

Aus fertigungstechnischen Gründen ist es zudem vorteilhaft, das Abschlußelement zweiteilig auszubilden, nämlich aus einem Aufnahmeteil für die Aufnahme der Membranelemente und einem mit dem Aufnahmeteil verbindbaren Zuführungsteil für die Zuführung des zu trennenden Mediums. Eine derartige zweiteilige Ausbildung des Abschlußelementes gestattet auf einfache Weise die Ausbildung des Permeatsammelkanals sowie der Permeatabflußöffnungen bzw. die Ausbildung des Permeatauslasses oder einer Mehrzahl von Permeatauslässen. Zudem gestattet die zweiteilige Ausbildung des Abflußelementes auch die einfache Fixierung der Membranelemente, beispielsweise durch auf an sich bekannte Weise ausgeführtes Eingießen der entsprechenden Enden der Membranelemente mit Gießharz oder dgl., die im Abschlußelement zu fixieren sind. Gleiches gilt auch für das gesondert ausbildbare Zuführungsteil des Abschlußelementes, das eine demgemäß unproblematische Ausgestaltung der Durchgänge bzw. Durchgangsöffnungen in der vorbeschriebenen Art mit unterschiedlichen Durchgangsöffnungsquerschnitten erlaubt. Aufnahmeteil und Zuführungsteil des Abschlußelementes können beispielsweise aus geeignetem Gießharz oder auch aus an sich beliebigen geeigneten Kunststoffen hergestellt werden und werden dann nach vorbestimmter Ausbildung in Form der vorbeschriebenen jeweiligen Einzelteile durch Klebung oder durch die direkte werkstoffschlüssige Verbindung miteinander verbunden.

Um sicherzustellen, daß die Membranelemente druckdicht und mechanisch fest im Aufnahmeteil fixiert werden können, ist es vorteilhaft, für die Grundbefestigung der Membranelemente im Aufnahmeteil ein hartelastisches Verbindungsmittel vorzusehen und zur Gewährleistung einer zum Gehäuseinnenraum sich einstellbaren Bewegbarkeit der Membranelemente ein weichelastisches Verbindungsmittel vorzusehen, so daß bei Bewegung der Membranelemente beim bestimmungsgemäßen Betrieb bzw. Beaufschlagung der Vorrichtung mit zu trennendem Medium kein Abbrechen oder Undichtwerden der Membranelemente auftreten kann. Das äußere weichelastische Verbindungsmittel trägt zwar zur ordnungsgemäßen Fixierung der Membranelemente im Aufnahmeteil bei, es gestattet aber eine an sich ungehinderte Beweglichkeit der Membranelemente auch in radialer Richtung, bezogen auf eine durch die Vorrichtung in Längsrichtung hindurchgehende gedachte Vorrichtungsachse.

Prinzipiell sind der Aufbau und die bestimmungsgemäße Funktion der Vorrichtung unabhängig von der Art der Aufbringung des Druckes des zu trennenden Mediums, um dieses bestimmungsgemäß durch die Vorrichtung und insbesondere durch die Membranelemente hindurchzubefördern, d.h. die Vorrichtung kann sowohl bei mediumseitigem Überdruck als auch bei permeatseitigem Unterdruck betrieben werden. Auch bezüglich der Durchströmung der Vorrichtung sind unterschiedliche Betriebsweisen realisierbar. Prinzipiell kann die Vorrichtung im sogenannten Cross-Flow-Betrieb, siehe oben, d.h. mit hohen Geschwindigkeiten axial durchströmt, betrieben werden oder im sogenannten Dead-End-Betrieb, bei dem nur soviel Rohwasser in die Vorrichtung geleitet wird, wie das Permeat abgezogen wird. Bei einer vorteilhaften weiteren anderen Betriebsweise der Vorrichtung wird jedoch das zu trennende Medium mittels einer im Mediumstrom angeordneten Pumpe in und durch die Vorrichtung nach Art eines sogenannten "Semi-Cross-Flow"- Verfahrens geleitet. Das bedeutet, daß die Vorrichtung nur von geringen Medienströmen durchströmt wird. Zur Erhöhung der Triebkraft des Trennprozesses und damit auch der Filtrationsleistung ist bei der Betriebsweise nach dem Semi-Cross-Flow-Verfahren ein Kombinationsbetrieb von mediumseitig geringem Überdruck und permeatseitigem Unterdruck von Vorteil. Damit ist die erfindungsgemäße Vorrichtung universell, d.h. für .einen sehr großen Bereich an Feststoffkonzentrationen im zu trennenden Medium einsetzbar.

Wie oben erwähnt, kann es bei im Stand der Technik bekannten Vorrichtungen zu einer Verblockung, einer Deckschichtbildung oder einer sonstigen negativen Beeinflussung der Membranelemente durch die Fremdstoffe kommen, die im zu trennenden Medium mitgeführt werden. Zwar ist durch lösungsgemäße bzw. erfindungsgemäße Konstruktion der Vorrichtung eine derartige Verblockung, Deckschichtbildung oder sonstige Beeinflussung weitgehend ausgeschlossen, es können aber bestimmte seltene Konstellationen nicht vollständig ausgeschlossen werden, in denen eine Beeinflussung der Trennwirkung der Membran aufgrund dieser Umstände nicht doch auftreten kann.

Beim Cross-Flow-Betrieb wird die Verblockung der Vorrichtung durch hohe Strömungsgeschwindigkeiten vermieden mit dem Nachteil eines hohen Energiebedarfs für die Pumpen. Der Dead-End-Betrieb arbeitet zwar bei niedrigem Energieverbrauch, erfordert aber in regelmäßigen Abständen eine Betriebsunterbrechung und Reinigung. Um Verblockung beim erfindungsgemäß möglichen Semi-Cross-Flow-Betrieb vorzubeugen ist vorzugsweise die Zufuhr von zu trennendem Medium und eine Zufuhr von Luft zu und durch die Vorrichtung über vorbestimmbare jeweilige Zeitintervalle durchführbar, wobei die Zufuhr der Luft vorteilhafterweise zum Beispiel derart durchgeführt werden kann, daß diese getaktet durch die Vorrichtung geleitet wird, beispielsweise in solchen Intervallen, bei denen der Zeitraum für die Luftzuführung über 1 Sekunde gewählt wird, wohingegen eine Unterbrechung der Zufuhr von Luft beispielsweise über 6 Sekunden erfolgt. Das hat den Vorteil, daß beispielsweise durch die aufeinanderfolgenden Impulse der Luft diese als Kraftstöße wirken, die auf der Membranoberfläche festgesetzte Partikel oder Partikelplaques entfernen können. Des weiteren hat das Einbringen von Luft auch den zusätzlichen Vorteil, daß dadurch eine Turbulenzsteigerung des zu trennenden Mediums in den Strömungskanälen ermöglicht wird, wodurch auch die Trennwirkung der Membranelemente noch zusätzlich erhöht wird. Unterstützend wirkt dabei, daß die Membranelemente, die in der Vorrichtung nur einseitig befestigt sind, sich in der Medienströmung in radialer Richtung bewegen können.

Vorteilhaft ist es schließlich, daß das Gehäuse wenigstens an dem mediumzufuhrseitigen Ende mit einem die Gehäuseöffnung abdichtenden Anschlußelement versehen ist, wobei das Anschlußelement die Vorrichtung bzw. das Gehäuse der Vorrichtung an wenigstens einem Ende abschließt. Es sei aber darauf hingewiesen, daß das Anschlußelement nicht zwingend für den bestimmungsgemäßen Aufbau und/oder den bestimmungsgemäßen Betrieb der Vorrichtung in ihrer Gesamtheit erforderlich ist. Der Aufbau des Anschlußelementes kann somit in Abhängkeit des Aufbaus der Vorrichtung bzw. des Aufbaus und des Querschnittes des Gehäuses auf vielfältige Weise variieren. Aufgrund des geringen Drucks des zu trennenden Mediums im Vergleich zum Umgebungsdruck kann das Anschlußelement mittels einfacher Dichtmaßnahmen, beispielsweise mittels eines umlaufenden O-Ringes aus elastomerem Werkstoff, der in einer in dem Anschlußelement angeordneten umlaufenden Nut angeordnet ist, gegenüber dem Gehäuse, nachdem es in dieses hineingeschoben worden ist, abgedichtet werden. Mittels eines ähnlich eines Seeger-Ringes ausgebildeten Sicherungsringes, der dann in eine entsprechende umlaufende Innennut des Gehäuses hineinragt, kann das Anschlußelement im Gehäuse, nachdem es eingebracht ist, dort beispielsweise lösbar fixiert werden.

Das Anschlußelement selbst umfaßt vorteilhafterweise ebenfalls wenigstens einen Permeatauslaß, der mit wenigstens einem Permeatauslaß, der auf oben beschriebene Weise im Anschlußelement ausgebildet ist, verbindbar ist, beispielsweise mittels eines druckdichten und mit den jeweiligen Auslässen druckdicht verbindbaren Rohres. Ein im Anschlußelement beispielsweise zentral angeordneter Durchlaß für das zu trennende Medium sorgt für die gut verteilte Zufuhr des zu trennenden Mediums zum Abschlußelement, von wo es über die dort ausgebildeten Durchgänge in die Strömungskanäle zwischen den Membranelementen einmündet.

Vorteilhafterweise ist es schließlich möglich, eine Mehrzahl von Vorrichtungen, die auf vorbeschriebene Weise ausgebildet sein können, nach Art einer Reihenschaltung hintereinanderzuschalten, wobei derartige Vorrichtungen dann hintereinandergeschaltet beispielsweise in einem gemeinsamen Gehäuse, das ebenfalls als Rohrhalbzeug preiswert zur Verfügung steht, angeordnet werden können, um seine bestimmungsgemäße Funktion ausüben zu können. Eine derartige Reihenschaltung von Vorrichtungen hat den Vorteil, daß damit die einzelnen Vorrichtungen keine große Baulänge aufzuweisen brauchen, was wiederum den Vorteil hat, daß permeatseitige Druckverluste auf bei sehr geringen Strömungsquerschnitten der Permeatkanäle im inneren der Membranelemente klein sind.

Die Membranelemente sind bezüglich ihres Membraninnenraumes an ihrer nicht fixierten Seite vorzugsweise geschlossen ausgebildet, wobei es sehr vorteilhaft ist, daß die Membranelemente mit ihrem nicht fixierten Bereich relativ zum strömenden Medium frei beweglich sind. Dadurch wird eine Verblockung nahezu ausgeschlossen und auch das Abstreifen von faserigen oder haarigen Bestandteilen im zu trennenden Medium in Strömungsrichtung ermöglicht.

Die Vorrichtung ist auch vorteilhafterweise mit mediumseitigem Überdruck und/oder permeatseitigem Unterdruck betreibbar, wodurch Betriebsweisen nach einem Dead-End-Betrieb, Cross-Flow-Betrieb oder Semi-Cross-Flow-Betrieb möglich sind.

Die Erfindung wird nun unter Bezugnahme auf die nachfolgenden schematischen Zeichnungen anhand eines Ausführungsbeispieles eingehend beschrieben. Darin zeigen:
- Fig. 1: Eine Anordnung von auf dem Abschlußelement der Vorrichtung angeordneten Membrantrenneinrichtungen in Form von Kissenmembranen, wobei 6 Kissenmembranen einen Strömungskanal einschließen,
- Fig. 1a: die in Fig. 1 dargestellten Kissenmembranen, die einen sechseckigen Strömungskanal einschließen, d.h. 6 voneinander getrennte Kissenmembranen umranden den Strömungskanal,
- Fig. 2: eine Mehrzahl von auf dem Abschlußelement der Vorrichtung angeordneten Membrantrenneinrichtungen in Form von Hohlfadenmembranen, wobei die Hohlfadenmembranen jeweils einen Strömungskanal einschließen,
- Fig. 2a: die in Fig. 2 dargestellten Hohlfadenmembranen in einer sechseckigen Anordnung, so daß diese in ihrer Gesamtheit jeweils einen sechseckigen Strömungskanal einschließen,
- Fig. 3: einen Schnitt durch die Vorrichtung gemäß der Linie A-B von Fig. 7, wobei die Hohlfadenmembranen bei der dort dargestellten Ausgestaltung bündelförmig gemäß der Darstellung von Fig. 4a angeordnet sind,
- Fig. 4: eine weitere andere Ausgestaltung der Anordnung von Hohlfadenmembranen um die Strömungskanäle herum,
- Fig. 4a: bündelförmig angeordnete Hohlfadenmembranen, wobei die Bündel derart angeordnet sind, daß sie in ihrer Gesamtheit jeweils einen sechsekkigen Strömungskanal einschließen,
- Fig. 5: einen Teilausschnitt des Gehäuses der Vorrichtung im Schnitt, und zwar im Bereich der Anordnung des Abschlußelementes im Gehäuse,
- Fig. 6: in perspektivischer Darstellung eine Ansicht von unten auf das Abschlußelement bzw. den Zuführungsteil des Abschlußelementes mit dem Blick auf die Durchgänge im Abschlußelement,
- Fig. 7: eine realisierte Vorrichtung im Teilausschnitt im Schnitt, wobei quasi zwei Vorrichtungen in Reihenschaltung innerhalb des Vorrichtungsgehäuses hintereinander angeordnet sind, und

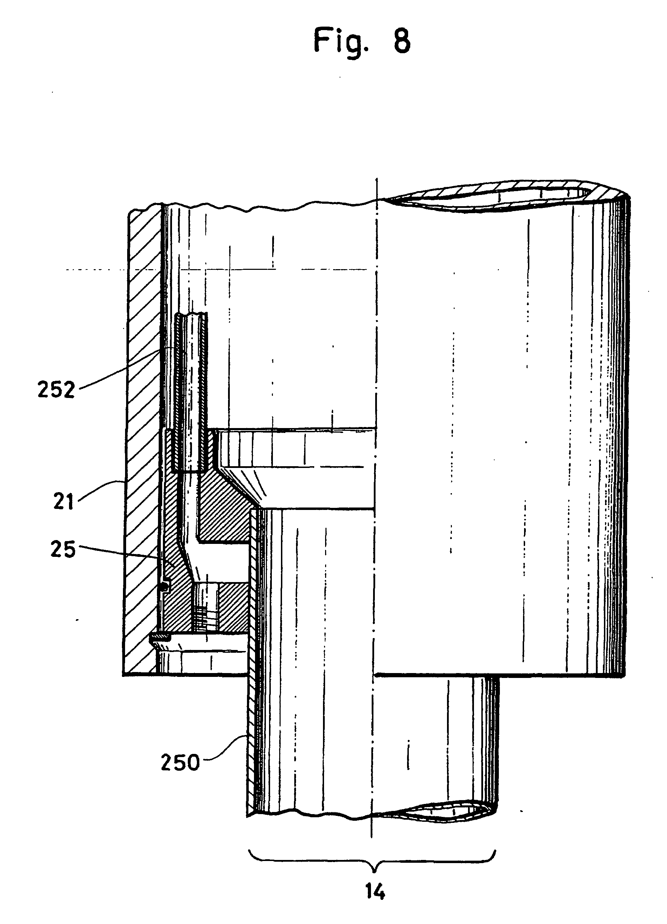

- Fig. 8: im Teilausschnitt im Schnitt und nur eine axiale Hälfte des Gehäuses sowie des das Gehäuse eingangsseitig abschließenden Anschlußelementes.

Die Vorrichtung 10 zum Trennen von mit Fremdstoffen belasteten flüssigen Medien 11, die insbesondere kommunale und gewerbliche Abwässer sind, umfaßt eine Mehrzahl von Membrantrenneinrichtungen 12, die wiederum jeweils durch eine Mehrzahl von Membranelementen 13 gebildet werden. Wie bei der Stofftrennung mittels Membranelementen 13 üblich, wird das zu trennende Medium 11, das in der Fachwelt auch Feed genannt wird, auf die Eingangsseite der Membranelemente 13 geleitet, wobei aufgrund der gewählten Permeabilität bzw. Selektivität der Membranelemente 13 hier das Medium 11 durch das Membranelement 13 hindurch permeiert, wohingegen die Feststoffe und alle sonstigen von der Membran zurückgehaltenen Stoffe auf der Mediumzufuhrseite bzw. Retentatseite der Membran verbleiben. Diese werden dann, je nach Betriebsweise, kontinuierlich (beim Cross-Flowoder Semi-Cross-Flow-Betrieb) oder diskontinuierlich (beim Dead-End-Betrieb) in aufkonzentrierter Form aus der Vorrichtung 10 ausgetragen und gegebenenfalls einer weiteren Behandlung zugeführt. Das Permeat 17 wird gesammelt und ebenfalls über einen Permeatauslaß 18 aus der Vorrichtung 10 entfernt. Dieser physikalische Mechanismus ist der Fachwelt allseits bekannt und wird deshalb hier an dieser Stelle nicht weiter erörtert.

Die Vorrichtung 10 umfaßt ein Gehäuse 21, das hier rohrförmig ausgebildet ist und als Rohrhalbzeug im Handel erhältlich auf vorbestimmte Längen abgetrennt wird. Da die Vorrichtung 10 nur mit gegenüber dem an der Außenseite 23 der Vorrichtung 10 herrschendem Druck geringfügigem Überdruck betrieben wird, kann das Gehäuse 21 aus beliebigen geeigneten Kunststoffen, gegebenenfalls aber auch aus Metall bestehen.

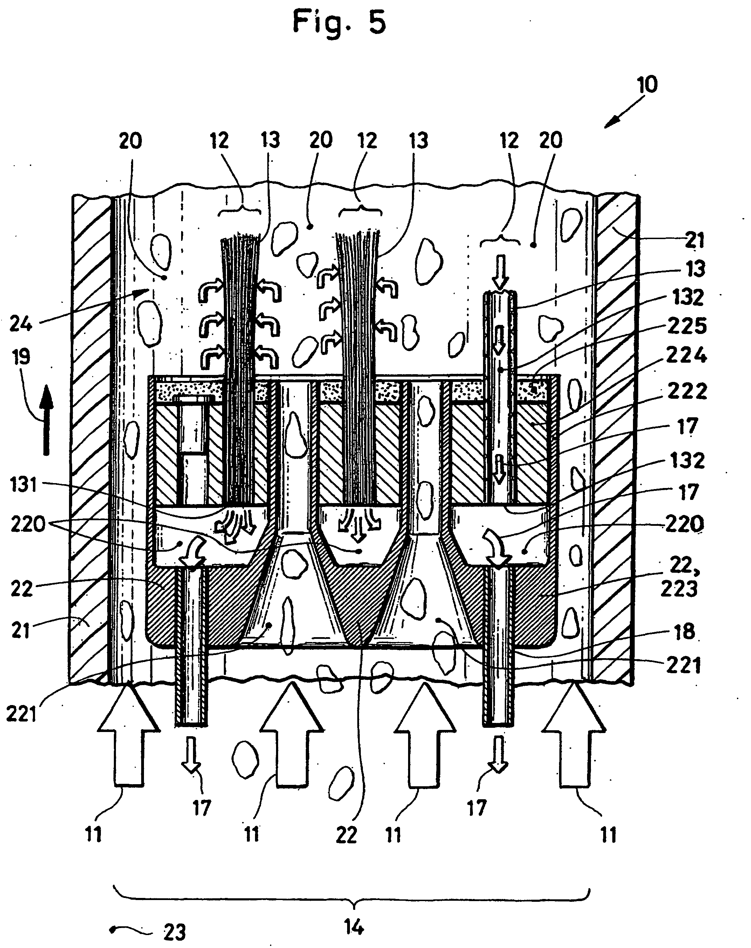

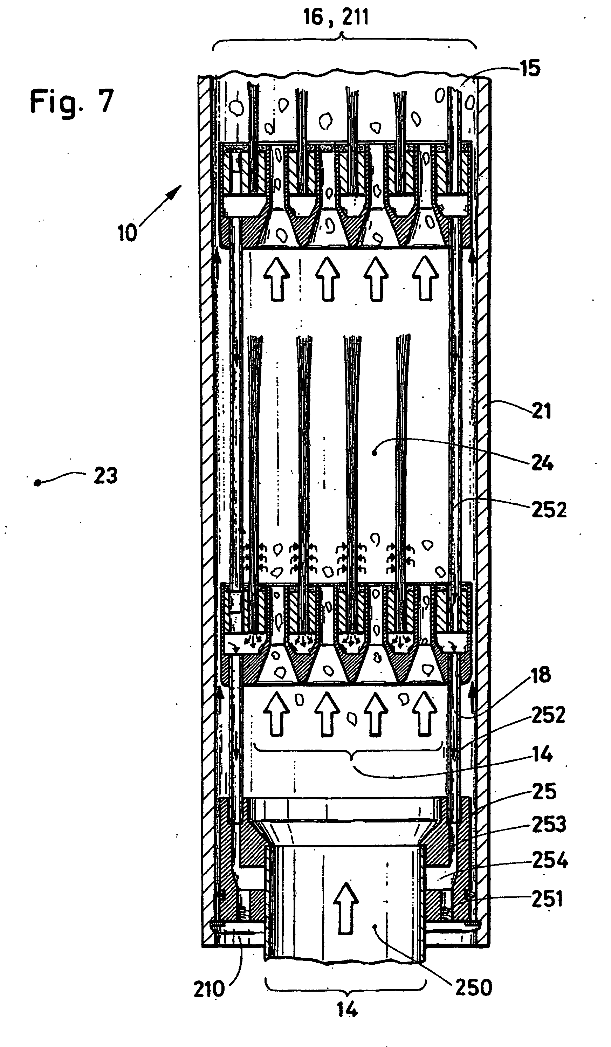

Im Gehäuse 21 ist ein lösbar anbringbares Abschlußelement 22 angeordnet, vergleiche insbesondere die Fig. 5 und Fig. 7, das die Membranelemente 13 im einzelnen dichtend aufnimmt. Das Abschlußelement 22 besteht bei der hier beschriebenen Ausgestaltung aus 2 Teilen, nämlich dem Aufnahmeteil 222 für die Membranelemente 13 und aus einem Zuführungsteil 223, in dem erste Teile der das Abschlußelement 22 durchquerenden Durchgänge 221, von ihrer Anströmseite für das zu trennende Medium 11 her betrachtet, ausgebildet sind. Es ist dem Fachmann bekannt, wie beispielsweise als Hohlfadenmembranen ausgebildete Membranelemente 13 in ein Abschlußelement 22, das regelmäßig aus gießfähigem Harz bzw. Kunststoff besteht, eingebracht werden, und es ist dem Fachmann auch bekannt, wie nach dem Einbringen und dem Aushärten des Harzes die notwendigen Permeatabflußöffnungen 131 freigelegt werden. Auf gleiche Weise können prinzipiell auch als Membrankissen ausgebildete Membranelemente 13 in dem Abschlußelement 22 bzw. dem Aufnahmeteil 222 des Abschlußelementes 22 eingebracht und dort fixiert werden. Es besteht somit für die Fixierung der Membranelemente 13 in Form von Hohlfadenmembranen oder Membrankissen im Abschlußelement 22 kein Unterschied, was prinzipiell aber auch für Membranelemente 13 gilt, die lediglich eine einseitige Membranschicht haben bzw. einschichtig in bezug auf ihre trennaktive Schicht ausgebildet sind.

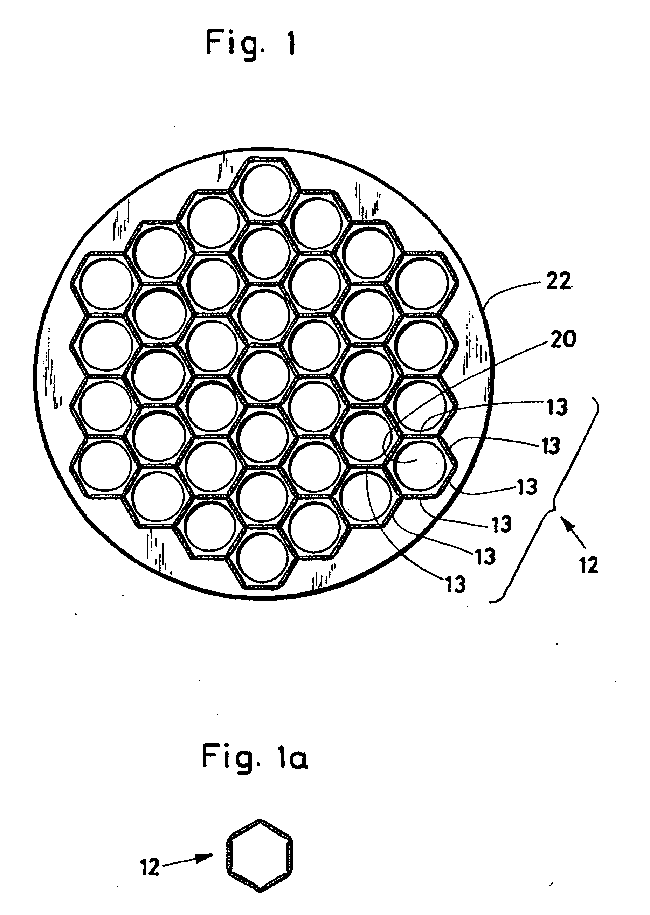

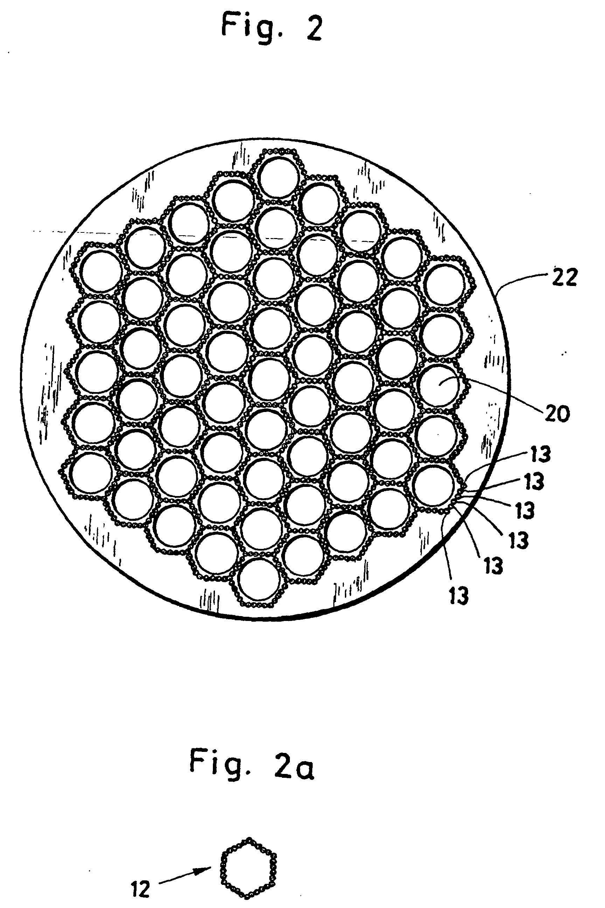

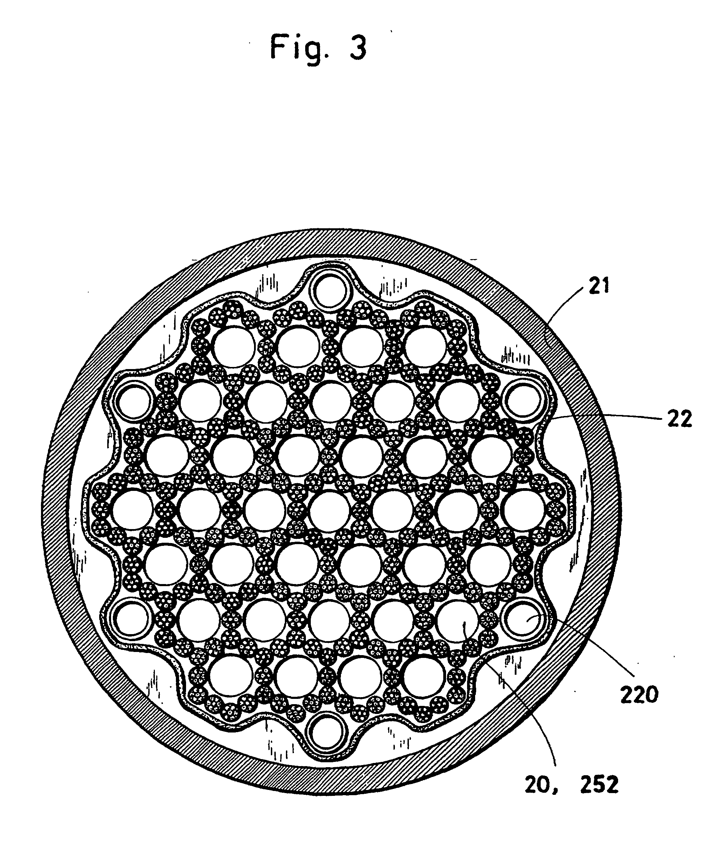

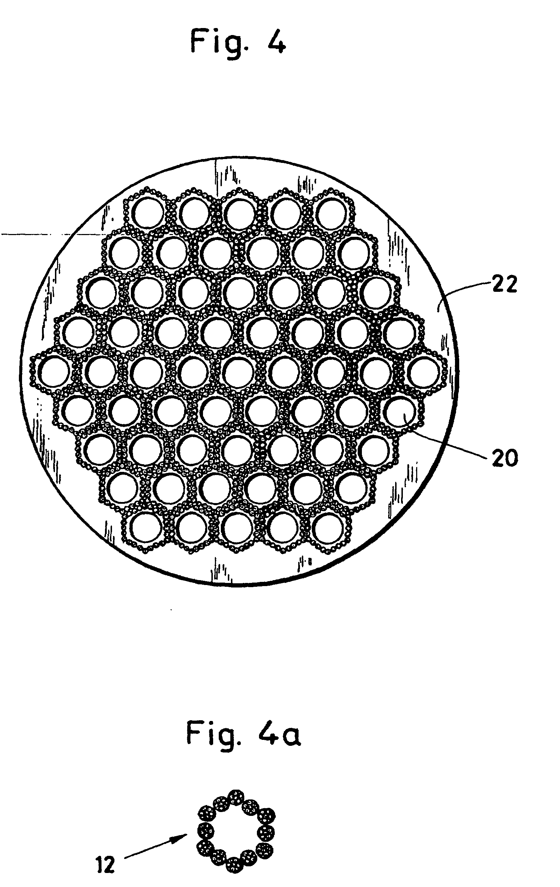

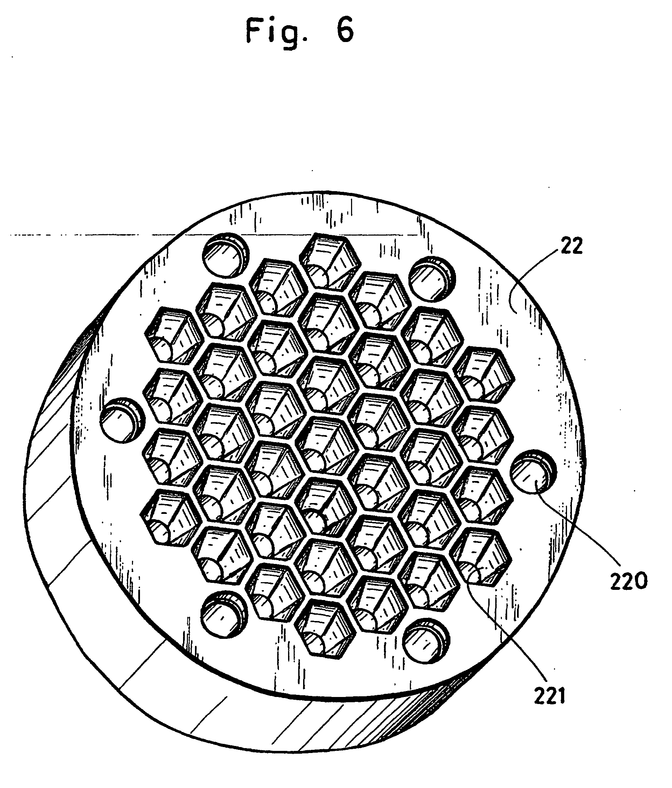

Das in Fig. 5 dargestellte Abschlußelement 22 ist hier nicht druckdicht im Gehäuse 21 angeordnet, um Freiraum zu lassen bzw. sicherzustellen, daß auch im Randbereich Medium 11 in bzw. durch den Innenraum 24 des Gehäuses 21 strömen kann, so daß auch die im Randbereich des Abschlußelementes 22 angeordneten Membranelemente 13 vom zu trennenden Medium 11 umflossen werden. Daraus ergibt sich auch die im Querschnitt mäanderförmige äußere Struktur des Abschlußelementes 22, wie in Fig. 3 dargestellt. Diese kann vereinfachend auch in Form einer Kreisgeometrie ausgebildet sein. Das Abschlußelement 22 weist zudem einen Permeatsammelraum 220 auf. In diesen Permeatsammelraum 220 tritt das aus den Membranelementen 13 aus ihren Permeatabflußöffnungen 131 austretende Permeat 17 ein. In den Permeatsammelraum tritt zudem der gesammelte Permeatvolumenstrom aus den zur Retentatseite der Vorrichtung 10 hin in Reihe geschalteten Abschlußelementen durch die Verbindungsrohrleitung 132 ein. Im Abschlußelement 22 sind zudem Permeatauslässe 18 angeordnet, über die das im Permeatsammelkanal 220 gesammelte Permeat 17 abgeführt wird. Das Abschlußelement 22 weist auch die schon vorerwähnten Durchgänge 221 auf. Die Durchgänge 221 durchqueren das Abschlußelement 22 von der Außenseite 23 zum Vorrichtungsinnenraum 24. Die Durchgänge 221 sind bei der hier dargestellten Ausgestaltung der Vorrichtung 10 an ihrem zur Außenseite 23 gerichteten Ende im Querschnitt sechseckig ausgebildet, wohingegen sie an ihrem zum Vorrichtungsinnenraum 24 gerichteten Ende im Querschnitt kreisförmig ausgebildet sind, vergleiche auch die Ansichten auf das Abschlußelement 22 in der Fig. 1, Fig. 2, Fig. 3 und Fig. 4 sowie insbesondere auch die Fig. 6, aus der der Übergang von einer sechseckigen Querschnittsform der Durchgänge 221 zur kreisförmigen Querschnittsform deutlich sichtbar ist. Es sei aber darauf hingewiesen, daß beliebige Querschnittsformen für die Durchgänge in Abhängigkeit des Aufbaus der Vorrichtung und auch der verwendeten Membranelemente 13 und des zu trennenden Mediums 11 gewählt werden können.

Das Abschlußelement 22 besteht, wie ebenfalls schon voranstehend erwähnt, bei der hier beschriebenen Ausgestaltung aus dem Aufnahmeteil 222 und dem Zuführungsteil 223. Im Aufnahmeteil 222 werden die Membranelemente 13 mit einem hartelastischen Verbindungsmittel 224 befestigt, und zwar zur Sicherung der Grundbefestigung und ihrer druckdichten Abdichtung gegenüber dem Permeatraum. Da die Membranelemente 13 lediglich an einem Ende, bezogen auf die Gehäuselängsrichtung, fixiert sind, und zwar in dem Aufnahmeteil 222 des Abflußelementes 22, hingegen mit ihrem anderen Ende fixierungsfrei und somit im Gehäuseinnenraum 24 in radialer Richtung beweglich sind, diese Beweglichkeit aber zu Brüchen bzw. Beschädigungen der Membranelemente 13 im Befestigungsbereich führen kann, ist zur Sicherstellung einer im Gehäuseinnenraum 24 zu gewährleistenden Bewegbarkeit der Membranelemente 13, ohne daß diese brechen oder beschädigt werden, ein weichelastisches Verbindungsmittel 225 vorgesehen, mit dem diese quasi als Abschlußschicht im Aufnahmeteil 222 des Abschlußelementes 22 befestigt sind. Weiterhin umfaßt die Vorrichtung 10 ein in ihrem Gehäuse 21 wenigstens an ihrem mediumzufuhrseitigen Ende die Gehäuseöffnung 210 abdichtendes Abschlußelement 25, das einen zentralen Durchlaß 250 für das zu trennende Medium 11 aufweist. Des weiteren sind in dem Anschlußelement 25 Rohranschlußstutzen- oder Öffnungen 253 vorgesehen, über die mittels einer Mehrzahl von Rohren 252, gegebenenfalls auch nur mittels eines Rohres 252, eine Verbindung zu den Permeatauslässen des Abschlußelementes 22, vergleiche Fig. 7, hergestellt werden kann. Es versteht sich von selbst, daß diese Rohrverbindungen in ihrer Gesamtheit natürlich druckdicht ausgebildet sein müssen, um eine Vermischung des Permeats 17 mit dem zu trennenden Medium 11 zu vermeiden. Ober einen Permeatsammelkanal 254, in den im Inneren des Anschlußelementes 25 alle Rohranschlußstutzen 253 münden, wird das Permeat 17 gesammelt und über den Permeatauslaß 251 des Anschlußelementes 25 auf geeignete Weise zum bestimmungsgemäßen Gebrauch abgeführt.

Wie aus Fig. 7 ersichtlich, ist es möglich, eine Mehrzahl von Vorrichtungen 10 nach Art einer Reihenschaltung hintereinander in einem Gehäuse 21 vorzusehen, wobei in der Darstellung von Fig. 7 lediglich 2 Vorrichtungen 10 hintereinandergeschaltet sind. Je nach Anwendungsgebiet können aber auch unterschiedliche Ausgestaltungen mit noch mehr Vorrichtungen 10 in einem Gehäuse aufgenommen werden. Die durchschnittliche Länge der Membranelemente 13 in Längsrichtung der Vorrichtung 10 bzw. in Längsrichtung des Gehäuses 21 liegt im Bereich von 400 bis 2000 mm.

Wie ebenfalls schon erwähnt, wird bei dem Betrieb der Vorrichtung das zu trennende Medium 11 gegenüber dem an der Außenseite 23 der Vorrichtung 10 herrschenden Druck nur gering erhöht, was mittels einer im Medienstrom angeordneten, hier nicht dargestellten Pumpe erfolgen kann. Die Vorrichtung 10 wird dann vorteilhaft nach Art eines "Semi-Cross-Flow"-Verfahrens betrieben. Um ein Verblocken der Membranelemente 13 während des Betriebes der Vorrichtung zu verhindern oder auch eine wie auch immer sich ausbildende Deckschicht auf der Oberfläche der Membranelemente 13 zu vermeiden und zur Turbulenzsteigerung des flüssigen, zu trennenden Mediums 11 beim Strömen durch die Vorrichtung beizutragen, wird beim Semi-Cross-Flow-Betrieb in bestimmten Zeitintervallen Luft in den Innenraum 24 der Vorrichtung 10 gefördert, was gesondert oder gleichzeitig mit dem Einbringen des Mediums 11 geschehen kann. Dadurch wird zusätzlich eine Bewegung der Membranelemente 13 verursacht, was sich wiederum negativ auf eine Deckschichtbildung auf der Membranoberfläche auswirken kann. Dabei kann es gegebenenfalls hilfreich sein, die Zufuhr von Luft getaktet vonstattengehen zu lassen, beispielsweise eine Sekunde Luftzufuhr, beispielsweise 6 Sekunden Unterbrechung der Luftzufuhr. Jeder Luftimpuls gewährleistet eine neue statistische Verteilung der Luft, wodurch eine Kanalbildung der Strömung in der Vorrichtung 10 vermieden wird und damit weitestgehend die Verblockungen einzelner Strömungskanäle 20.

Es ist auch möglich, den Fluß des Permeats 17 umzukehren, d.h. gewissermaßen eine Permeatrückspülung der Membranelemente 13 zu veranlassen, so daß dadurch sich ausbildende Deckschichten oder sonstige Beläge entfernt werden können.

Die Membranelemente 13, wie sie erfindungsgemäß ausgebildet sind, bilden in Strömungsrichtung 19 des Mediums 21 durch die Vorrichtung 10 Strömungskanäle 20, wobei die Membranelemente 13 die Strömungskanäle im wesentlichen zwischen sich einschließen. Diese Art der Anordnung bzw. Ausbildung der Strömungskanäle 20, die hier beispielsweise im wesentlichen als sechseckige Strömungskanäle 20 im Querschnitt dargestellt sind, gewährleistet eine optimale Überstreichung der Membranelemente 13 mit zu trennendem Medium 11 beim Durchströmen des Mediums 11 durch die Vorrichtung 10.

### Bezugszeichenliste

- 10: Vorrichtung
- 11: Medium (zu trennendes), Feed
- 12: Membrantrenneinrichtung
- 13: Membranelement
- 130: Membranelementinnenraum
- 131: Permeatabflußöffnung
- 14: Einlaß (für Medium bzw. Feed)
- 15: Retentat
- 16: Retentatauslaß
- 17: Permeat
- 18: Permeatauslaß
- 19: Strömungsrichtung (des Mediums)
- 20: Strömungskanal
- 21: Gehäuse
- 210: Gehäuseöffnung
- 211: Gehäuseöffnung
- 22: Abschlußelement
- 220: Permeatsammelraum bzw. -abflüßkanal
- 221: Durchgang
- 222: Aufnahmeteil
- 223: Zuführungsteil
- 224: hartelastisches Verbindungsmittel
- 225: weichelastisches Verbindungsmittel
- 23: Außenseite/Luft
- 24: Vorrichtungsinnenraum
- 25: Anschlußelement
- 250: Durchlaß
- 251: Permeatauslaß (Anschlußelement)
- 252: Rohr
- 253: Rohrauslaßstutzen
- 254: Permeatsammelkanal

## Patentansprüche

1. Vorrichtung (10) zum Trennen von mit Fremdstoffen belasteten flüssigen Medien (11), insbesondere kommunalen und gewerblichen Abwässern, umfassend eine Membranelemente (13) aufweisende Membrantrenneinrichtung (12), wobei das zu trennende Medium über einen Einlaß (14) der Vorrichtung (10) auf die Zufuhrseite der Membrantrenneinrichtung (12) gegeben wird und das mit Fremdstoffen aufkonzentrierte Rententat (15) und das von Fremdstoffen befreite Permeat (17) über jeweilige Auslässe (18) der Vorrichtung (10) abgeführt werden, wobei eine Mehrzahl von Membranelementen (13) jeweils im wesentlichen in Strömungsrichtung (19) des Mediums (11) durch die Vorrichtung (10) sich wenigstens teilweise ausbildende, vom Einlaß (14) zu und den Auslaß (15) lineare Strömungskanäle (20) für das mit Fremdstoffen belastete Medium (11) im wesentlichen einschließen, **dadurch gekennzeichnet, daß** die Strömungskanäle (20) derart ausgebildet sind, daß alle Membranelemente (13) gleichzeitig von allen Seiten vom zu trennendem Medium (11) angeströmt werden, wobei die Strömungskanäle (20) vieleckig sind.

2. Vorrichtung nach Anspruch 1, **dadurch gekennzeichnet, daß** der Strömungskanal (20) im Querschnitt sechseckig ausgebildet ist.

3. Vorrichtung nach einem oder beiden der Ansprüche 1 oder 4, **dadurch gekennzeichnet, daß** die Membranelemente (13) in Form von Kissenmembranen (Membrankissen, Membrantaschen) ausgebildet sind.

4. Vorrichtung nach einem oder beiden der Ansprüche 1 oder 5, **dadurch gekennzeichnet, daß** die Membranelemente (13) in Form von Hohlfadenmembranen ausgebildet sind.

5. Vorrichtung nach einem oder mehreren der Ansprüche 1 bis 4, **dadurch gekennzeichnet, daß** diese ein Gehäuse (21) aufweist, in der die Mehrzahl der Membranelemente (13) angeordnet ist.

6. Vorrichtung nach Anspruch 5, **dadurch gekennzeichnet, daß** die Membranelemente (13) mit ihren Permeatabflußöffnungen (131) in ein im Gehäuse (21) lösbar anbringbares Abschlußelement (22) münden.

7. Vorrichtung nach Anspruch 6, **dadurch gekennzeichnet, daß** das Abschlußelement (22) einen Permeatabflußkanal (220) aufweist, in den das aus den Membranelementen (13) aus ihren Permeatabflußöffnungen (131) austretende Permeat (17) eintritt, wobei das die Vorrichtung (10) verlassende Permeat über den mit dem Permeatabflußkanal (220) verbundenen Permeatauslaß (18) abführbar ist.

8. Vorrichtung nach einem oder beiden der Ansprüche 6 oder 7, **dadurch gekennzeichnet, daß** das Abschlußelement (22) eine Mehrzahl von Durchgängen (221) für das flüssige Medium (11) entsprechend der Mehrzahl von Strömungskanälen (20) aufweist, wobei die Durchgänge (221) das Abschlußelement (22) von der Außenseite (23) zum Vorrichtungsinnenraum (24) hin durchqueren.

9. Vorrichtung nach Anspruch 8, **dadurch gekennzeichnet, daß** die Durchgänge (221) an ihrem zur Außenseite (23) gerichteten Ende im Querschnitt vieleckig oder sechseckig oder kreisförmig und an ihrem zum Vorrichtungsinnenraum (24) gerichteten Ende im Querschnitt vieleckig oder sechseckig oder kreisförmig ausgebildet sind.

10. Vorrichtung nach einem oder mehreren der Ansprüche 6 bis 9, **dadurch gekennzeichnet, daß** das Abschlußelement (22) aus einem Aufnahmeteil (222) für die Aufnahme der Membranelemente (13) und einem mit dem Aufnahmeteil (222) verbindbaren Zuführungsteil (223) für die Zuführung des zu trennenden Mediums (11) besteht.

11. Vorrichtung nach Anspruch 10, **dadurch gekennzeichnet, daß** zur Befestigung der Membranelemente (13) im Aufnahmeteil (222) für deren Grundbefestigung ein hartelastisches Verbindungsmittel (224) und zur Gewährleistung einer relativ zum Gehäuseinnenraum (24) sich einstellbaren Bewegbarkeit der Membranelemente (13) ein weichelastisches Verbindungsmittel (225) vorgesehen ist.

12. Vorrichtung nach einem oder mehreren der Ansprüche 1 bis 11, **dadurch gekennzeichnet, daß** das zu trennende Medium (11) mittels einer im Mediumstrom angeordneten Pumpe in und durch die Vorrichtung (10) nach Art eines "Semi-Cross-Flow"-Verfahrens leitbar ist.

13. Vorrichtung nach einem oder mehreren der Ansprüche 1 bis 12, **dadurch gekennzeichnet, daß** die Zufuhr von zu trennendem Medium (11) und die Zufuhr von Luft (23) zu und durch die Vorrichtung (10) über vorbestimmbare jeweilige Zeitintervalle durchführbar ist.

14. Vorrichtung nach Anspruch 13, **dadurch gekennzeichnet, daß** die Zufuhr von Luft (23) und/oder des flüssigen Mediums (11) getaktet betreibbar ist.

15. Vorrichtung nach einem oder mehreren der Ansprüche 5 bis 14, **dadurch gekennzeichnet, daß** das Gehäuse (21) wenigstens an dem mediumzufuhrseitigen Ende mit einem die Gehäuseöffnung (210) abdichtenden Anschlußelement (25) versehen ist.

16. Vorrichtung nach Anspruch 15, **dadurch gekennzeichnet, daß** das Anschlußelement (25) einen Durchlaß (250) für das zu trennende Medium (11) aufweist.

17. Vorrichtung nach einem oder beiden der Ansprüche 15 oder 16, **dadurch gekennzeichnet, daß** das Anschlußelement (25) wenigstens einen Permeatauslaß (251) umfaßt, der mit wenigstens einem Permeatauslaß (18), der in dem Abschlußelement (22) ausgebildet ist, verbindbar ist.

18. Vorrichtung nach einem oder mehreren der Ansprüche 1 bis 17, **dadurch gekennzeichnet, daß** eine Mehrzahl von Vorrichtungen (10) nach Art einer Reihenschaltung hintereinanderschaltbar sind.

19. Vorrichtung nach einem oder mehreren der Ansprüche 1 bis 18, **dadurch gekennzeichnet, daß** die Membranelemente (13) bezüglich ihres Membraninnenraumes (130) an ihrer nicht fixierten Seite geschlossen ausgebildet sind.

20. Vorrichtung nach einem oder mehreren der Ansprüche 1 bis 19, **dadurch gekennzeichnet, daß** die Membranelemente (13) mit ihrem nicht fixierten Bereich relativ zum strömenäen Medium (11) frei beweglich sind.

21. Vorrichtung nach einem oder mehreren der Ansprüche 1 bis 20, **dadurch gekennzeichnet, daß** diese mit mediumseitigem (11) Überdruck und/oder permeatseitigem (17) Unterdruck betreibbar ist.

## Claims

1. Apparatus (10) to separate liquid media (11) contaminated with foreign substances, in particular municipal and industrial aqueous effluents, comprising a membrane separation device (12) having membrane elements (13), whereby the medium to be separated is fed into the input side of the membrane separation device (12) through an inlet (14) of the apparatus (10) and the retentate (15) with an increased concentration of foreign substances and the permeate (17) freed from foreign substances are removed via respective outlets (18) of the apparatus (10), whereby a plurality of membrane elements (13) essentially enclose linear flow channels (20) for the medium (11) contaminated with foreign substances, each at least partly extending essentially in the direction of flow (19) of the medium (11) through the apparatus (10) from the inlet (14) to the outlet (15), **characterized in that** the flow channels (20) are constructed in such a way that all of the membrane elements (13) are exposed simultaneously on all sides to the approaching flow of the medium (11) to be separated, whereby the flow channels (20) are polygonal.

2. Apparatus according to Claim 1, **characterized in that** the flow channel (20) has a hexagonal cross-section.

3. Apparatus according to one or both of the Claims 1 or 2, **characterized in that** the membrane elements (13) are constructed in the form of cushion membranes (membrane cushions, membrane pockets).

4. Apparatus according to one or both of the Claims 1 or 2, **characterized in that** the membrane elements (13) are constructed in the form of hollow thread membranes.

5. Apparatus according to one or more of the Claims 1 to 4, **characterized in that** it (the apparatus) has a housing (21) in which the plurality of membrane elements (13) is arranged.

6. Apparatus according to Claim 5, **characterized in that** the permeate outflow openings (131) of the membrane elements (13) open into a termination element (22) that is detachably attachable in the housing (21).

7. Apparatus according to Claim 6, **characterized in that** the termination element (22) has a permeate outflow channel (220) into which the permeate (17) emerging from the membrane elements (13) out of their permeate outflow openings (131) enters, whereby the permeate leaving the apparatus (10) is removable through the permeate outlet (18) that is connected to the permeate outflow channel (220).

8. Apparatus according to one or both of the Claims 6 or 7, **characterized in that** the termination element (22) has a plurality of passageways (221) for the liquid medium (11) corresponding to the plurality of flow channels (20), whereby the passageways (221) pass through the termination element (22) from the exterior (23) to the interior space (24) of the apparatus.

9. Apparatus according to Claim 8, **characterized in that** the cross-sections of the passageways (221) at their end pointing towards the exterior (23) are polygonal or hexagonal or circular and their cross-sections at their end pointing towards the interior space (24) of the apparatus are polygonal or hexagonal or circular.

10. Apparatus according to one or more of the Claims 6 to 9, **characterized in that** the termination element (22) consists of a receptacle portion (222) to accommodate the membrane elements (13) and an input feed portion (223) that can be connected to the receptacle portion (222) and is for the input feed of the medium (11) that is to be separated.

11. Apparatus according to Claim 10, **characterized in that**, in order to fasten the membrane elements (13) in the receptacle portion (222), a hard elastic means of connection (224) is provided for their basic attachment, and a soft elastic means of connection (225) is provided to ensure movability of the membrane elements (13) that is adjustable relative to the housing interior space (24).

12. Apparatus according to one or more of the Claims 1 to 11, **characterized in that** the medium (11) to be separated can be conveyed into and through the apparatus (10) by means of a pump arranged in the medium flow, in the manner of a "semi-cross-flow" process.

13. Apparatus according to one or more of the Claims 1 to 12, **characterized in that** the supply of the medium to be separated (11) and the supply of air (23) to and through the apparatus (10) can be carried out over pre-determinable respective time intervals.

14. Apparatus according to Claim 13, **characterized in that** the supply of air (23) and/or of the liquid medium (11) can be operated in a pulsed (clocked) manner.

15. Apparatus according to one or more of the Claims 5 to 14, **characterized in that** the housing (21) is equipped with a connector element (25) that seals the housing opening (210) at least at the end on the medium input feed side.

16. Apparatus according to Claim 15, **characterized in that** the connector element (25) has a passageway (250) through it for the medium (11) that is to be separated.

17. Apparatus according to one or both of the Claims 15 or 16, **characterized in that** the connector element (25) comprises at least one permeate outlet (251) that can be connected to at least one permeate outlet (18) constructed in the termination element (22).

18. Apparatus according to one or more of the Claims 1 to 17, **characterized in that** a plurality of apparatus (10) can be connected one after another like a series connection.

19. Apparatus according to one or more of the Claims 1 to 18, **characterized in that** the membrane elements (13) are of closed construction with regard to their membrane interior space (130) at their non-fixed end.

20. Apparatus according to one or more of the Claims 1 to 19, **characterized in that** the non-fixed region of the membrane elements (13) is free to move relative to the flowing medium (11).

21. Apparatus according to one or more of the Claims 1 to 20, **characterized in that** it (the apparatus) can be operated with a positive pressure on the medium side (11) and/or a negative pressure on the permeate side (17).

## Revendications

1. Dispositif (10) pour séparer des milieux liquides (11) chargés de substances étrangères, en particulier pour les eaux usées communales et industrielles, comprenant un dispositif de séparation membranaire (12) comportant des éléments membranaires (13), le milieu à séparer étant donné au moyen d'une admission (14) du dispositif (10) sur le côté d'approvisionnement du dispositif de séparation membranaire (12) ainsi que le rétentat (15) concentré en substances étrangères et le perméat (17) libéré de substances étrangères étant évacués par des échappements (18) respectifs du dispositif (10), une pluralité d'éléments membranaires (13) incluant essentiellement des canaux d'écoulement linéaires (20) se formant au moins partiellement de l'admission (14) à l'échappement (18) pour le milieu (11) chargé de substances étrangères essentiellement dans le sens du courant (19) du milieu (11) à travers le dispositif (10), **caractérisé en ce que** les canaux d'écoulement (20) sont formés de telle façon que tous les éléments membranaires (13) sont simultanément traversés de tous côtés du milieu (11) à séparer, les canaux d'écoulement (20) étant polygonaux.

2. Dispositif selon la revendication 1, **caractérisé en ce que** le canal d'écoulement (20) présente une section transversale hexagonale.

3. Dispositif selon l'une des revendications 1 et 2 ou les deux, **caractérisé en ce que** les éléments membranaires (13) ont la forme de membranes en coussins (coussins membranaires, sacs membranaires).

4. Dispositif selon l'une des revendications 1 et 2 ou les deux, **caractérisé en ce que** les éléments membranaires (13) ont la forme de membranes en fil creux.

5. Dispositif selon une ou plusieurs des revendications 1 à 4, **caractérisé en ce que** celui-ci comporte une enveloppe (21), dans laquelle se trouve une pluralité d'éléments membranaires (13).

6. Dispositif selon la revendication 5, **caractérisé en ce que** les éléments membranaires (13) débouchent, par leurs ouvertures d'évacuation du perméat (131), dans un élément final (22) qui peut se résoudre dans l'enveloppe (21).

7. Dispositif selon la revendication 6, **caractérisé en ce que** l'élément final (22) comporte un canal d'écoulement du perméat (220), dans lequel entre le perméat (17) sortant des éléments membranaires (13) par leurs ouvertures d'évacuation du perméat (131), le perméat quittant dispositif (10) pouvant être conduit au moyen d'échappement du perméat (18) relié au canal d'écoulement du perméat (220).

8. Dispositif selon l'une des revendications 6 et 7 ou les deux, **caractérisé en ce que** l'élément final (22) comporte une pluralité de passages (221) pour le milieu liquide (11) correspondant à la pluralité des canaux d'écoulement (20), les passages (221) traversant l'élément final (22) de la face externe (23) à la cavité interne du dispositif (24).

9. Dispositif selon la revendication 8, **caractérisé en ce que** les passages (221) sont formés, à leur extrémité dirigée vers la face externe (23), en section polygonale ou hexagonale ou circulaire et, à leur extrémité dirigée vers la cavité interne du dispositif (24), en section polygonale, hexagonale ou circulaire.

10. Dispositif selon une ou plusieurs des revendications 6 à 9, **caractérisé en ce que** l'élément final (22) se compose d'une partie réceptrice (222) pour accueillir les éléments membranaires (13) et une partie d'approvisionnement (223) pour l'approvisionnement du milieu (11) à séparer pouvant être reliée à la partie réceptrice (222).

11. Dispositif selon la revendication 10, **caractérisé en ce que** l'on prévoit, dans la partie réceptrice, pour fixer les éléments membranaires (13), un agent liant élastique dur (224) pour sa solidification et, pour garantir une mobilité s'installant, relativement à la cavité interne (24) des éléments membranaires (13), un agent liant élastique lâche (225).

12. Dispositif selon une ou plusieurs des revendications 1 à 11, **caractérisé en ce que** le milieu à séparer (11) peut être conduit au moyen d'une pompe disposée dans le courant du milieu et à travers le dispositif (10) selon la méthode d'un procédé « semi-cross-flow ».

13. Dispositif selon une ou plusieurs des revendications 1 à 12, **caractérisé en ce que** l'approvisionnement du milieu à séparer (11) et l'approvisionnement en air (23) peut être réalisé dans et à travers le dispositif (10) à des intervalles temporels respectivement prédéterminés.

14. Dispositif selon la revendication 13, **caractérisé en ce que** l'approvisionnement de l'air (23) et/ou du milieu liquide (11) peut être réalisé de façon rythmée.

15. Dispositif selon une ou plusieurs des revendications 5 à 14, **caractérisé en ce que** l'enveloppe (21) est prévue, au moins à l'extrémité de l'approvisionnement en milieu, avec un élément final (25) calfeutrant l'ouverture de l'enveloppe (210).

16. Dispositif selon la revendication 15, **caractérisé en ce que** l'élément final (25) comporte un passage (250) pour le milieu à séparer (11).

17. Dispositif selon l'une des revendications 15 et 16 ou les deux, **caractérisé en ce que** l'élément final (25) comprend au moins un échappement du perméat (251), qui peut être relié avec au moins un échappement du perméat (18), qui est formé dans l'élément final (22).

18. Dispositif selon une ou plusieurs des revendications 1 à 17, **caractérisé en ce que** plusieurs dispositifs (10) peuvent être connectés l'un derrière l'autre selon une forme de connexion en série.

19. Dispositif selon une ou plusieurs des revendications 1 à 18, **caractérisé en ce que** les éléments membranaires (13) sont, en ce qui concerne leur cavité membranaire interne (130), fermés sur leur face non fixée.

20. Dispositif selon une ou plusieurs des revendications 1 à 19, **caractérisé en ce que** les éléments membranaires (13) sont librement mobiles avec leur région non fixée par rapport au milieu (11) les traversant.

21. Dispositif selon une ou plusieurs des revendications 1 à 20, **caractérisé en ce que** celui-ci peut fonctionner avec une surpression du côté du milieu (11) et/ou une sous-pression du côté du perméat (17).
